# EUROPEAN PATENT APPLICATION

(11) **EP 4 815 548 A1**
(43) Date of publication of application: **30.09.2026**
(21) Application number: 24893368.1
(22) Date of filing: 18.11.2024
(51) Int. Cl.: H04W 24/10

(54) **ENERGY CONSUMPTION INFORMATION ACQUISITION METHOD AND APPARATUS, AND NETWORK SIDE DEVICE**

(30) Priority: 24.11.2023 CN 202311587948
(71) Applicant: Vivo Mobile Communication Co., Ltd., Dongguan, Guangdong 523863 (CN)
(72) Inventor: SUN, Xiaowen, Dongguan, Guangdong 523863 (CN)
(74) Representative: dompatent
(86) International application number: PCT/CN2024/132553
(87) International publication number: WO 2025/108211

(57) **Abstract**

This application discloses an energy consumption information obtaining method and apparatus, and a network side device, and belongs to the field of wireless communication technologies. The energy consumption information obtaining method in embodiments of this application includes: receiving, by a first target function, a first target request, where the first target request is used for requesting to obtain energy consumption information of at least one target object; and obtaining, by the first target function, first energy consumption information of the at least one target object based on the first target request.

## Description

### CROSS-REFERENCE TO RELATED APPLICATIONS

This application claims priority to Chinese Patent Application No. 202311587948.7, filed with the China National Intellectual Property Administration on November 24, 2023 and entitled "ENERGY CONSUMPTION INFORMATION OBTAINING METHOD AND APPARATUS, AND NETWORK SIDE DEVICE", which is incorporated herein by reference in its entirety.

### TECHNICAL FIELD

This application relates to the field of wireless communication technologies, and specifically, to an energy consumption information obtaining method and apparatus, and a network side device.

### BACKGROUND

In a related technology, a network slice admission control function (Network Slice Admission Control Function, NSACF) monitors and controls a quantity of registered user equipments (User Equipments, UEs) on each network slice; and monitors and controls a quantity of protocol data units (Protocol Data Unit, PDU) sessions established on each network slice. In addition, a network slice status notification based on an event may be reported to a user network function (Network Function, NFC).

In addition, in the related technology, a quality of service (Quality of Service, QoS) monitoring (monitoring) mechanism may support detection for service indicators at a flow granularity, for example, a QoS flow delay and a user plane function (User Plane Function, UPF) data throughput, which are open to the outside through exposure (exposure) of the UPF.

However, the NSACF only monitors a service per (per) slice, and cannot perform energy consumption monitoring. In addition, the QoS monitoring mechanism mainly detects the service indicators, and cannot implement energy consumption monitoring. Therefore, energy consumption monitoring cannot be performed in the related technology.

### SUMMARY

Embodiments of this application provide an energy consumption information obtaining method and apparatus, and a network side device, to resolve a problem that energy consumption monitoring cannot be performed.

According to a first aspect, an energy consumption information obtaining method is provided, and includes: receiving, by a first target function, a first target request, where the first target request is used for requesting to obtain energy consumption information of at least one target object; and obtaining, by the first target function, first energy consumption information of the at least one target object based on the first target request.

According to a second aspect, an energy consumption information requesting method is provided, and includes: sending, by a network exposure function, a first target request to a first target function, where the first target request is used for requesting the first target function to obtain first energy consumption information of at least one target object.

According to a third aspect, an energy consumption information requesting method is provided, and includes: sending, by an application function, an energy consumption information obtaining request, where the energy consumption information obtaining request is used for requesting energy consumption information of at least one target object to be obtained; and receiving, by the application function, a second monitoring result corresponding to the at least one target object.

According to a fourth aspect, an energy consumption information obtaining apparatus is provided, and includes: a first receiving module, configured to receive a first target request, where the first target request is used for requesting to obtain energy consumption information of at least one target object; and an obtaining module, configured to obtain first energy consumption information of the at least one target object based on the first target request.

According to a fifth aspect, an energy consumption information requesting apparatus is provided, and includes: a first determining module, configured to determine that energy consumption information of at least one target object needs to be requested; and a second sending module, configured to send a first target request to a first target function, where the first target request is used for requesting the first target function to obtain the energy consumption information of the at least one target object.

According to a sixth aspect, an energy consumption information requesting apparatus is provided, and includes: a second determining module, configured to determine that energy consumption information of at least one target object needs to be requested; and a third sending module, configured to send an energy consumption information obtaining request, where the energy consumption information obtaining request is used for requesting the energy consumption information of the at least one target object.

According to a seventh aspect, a network side device is provided, where the network side device includes a processor and a memory, the memory stores a program or instructions runnable on the processor, and when the program or the instructions are executed by the processor, steps of the method according to the first aspect are implemented, steps of the method according to the second aspect are implemented, or steps of the method according to the third aspect are implemented.

According to an eighth aspect, a network side device is provided, and includes a processor and a communication interface, where the processor is configured to implement steps of the method according to the first aspect, implement steps of the method according to the second aspect, or implement steps of the method according to the third aspect; and the communication interface is configured to couple to the processor.

According to a ninth aspect, a readable storage medium is provided, where the readable storage medium stores a program or instructions, and when the program or the instructions are executed by a processor, steps of the method according to the first aspect are implemented, steps of the method according to the second aspect are implemented, or steps of the method according to the third aspect are implemented.

According to a tenth aspect, a wireless communication system is provided, and includes: a first target function, a network exposure function, and an application function, where the first target function may be configured to perform steps of the method according to the first aspect, the network exposure function may be configured to perform steps of the method according to the second aspect, and the application function may be configured to perform steps of the method according to the third aspect.

According to an eleventh aspect, a chip is provided, where the chip includes a processor and a communication interface, the communication interface is coupled to the processor, and the processor is configured to run a program or instructions, to implement steps of the method according to the first aspect, implement steps of the method according to the second aspect, or implement steps of the method according to the third aspect.

According to a twelfth aspect, a computer program/program product is provided, where the computer program/program product is stored in a storage medium, and the program/program product is executed by at least one processor to implement steps of the method according to the first aspect, implement steps of the method according to the second aspect, or implement steps of the method according to the third aspect.

In the embodiments of this application, after receiving a first target request, a first target function obtains first energy consumption information of at least one target object, to perform energy consumption monitoring on the at least one target object based on the request.

### BRIEF DESCRIPTION OF THE DRAWINGS

FIG. 1 is a block diagram of a wireless communication system to which an embodiment of this application may be applied;
FIG. 2a is a schematic flowchart of an energy consumption information obtaining method according to an embodiment of this application;
FIG. 2b is another schematic flowchart of an energy consumption information obtaining method according to an embodiment of this application;
FIG. 3 is a schematic flowchart of an energy consumption information requesting method according to an embodiment of this application;
FIG. 4 is another schematic flowchart of an energy consumption information requesting method according to an embodiment of this application;
FIG. 5 is a schematic flowchart of an energy consumption information monitoring method according to an embodiment of this application;
FIG. 6 is a schematic flowchart of an energy consumption information monitoring method according to an embodiment of this application;
FIG. 7 is another schematic flowchart of an energy consumption information monitoring method according to an embodiment of this application;
FIG. 8 is still another schematic flowchart of an energy consumption information monitoring method according to an embodiment of this application;
FIG. 9 is a schematic structural diagram of an energy consumption information obtaining method according to an embodiment of this application;
FIG. 10 is a schematic structural diagram of an energy consumption information requesting apparatus according to an embodiment of this application;
FIG. 11 is another schematic structural diagram of an energy consumption information requesting apparatus according to an embodiment of this application;
FIG. 12 is a schematic structural diagram of a communication device according to an embodiment of this application; and
FIG. 13 is a schematic diagram of a hardware structure of a network side device according to an embodiment of this application.

### DETAILED DESCRIPTION

The following clearly describes technical solutions in embodiments of this application with reference to accompanying drawings in the embodiments of this application. Apparently, the described embodiments are some of the embodiments of this application rather than all of the embodiments. Based on the embodiments of this application, all other embodiments obtained by a person of ordinary skill in the art shall fall within the protection scope of this application.

In this application, terms "first", "second", and the like are used to distinguish similar objects but are not used to describe a specific sequence or order. It should be understood that the terms used in such a way are interchangeable in proper circumstances, so that the embodiments of this application can be implemented in other sequences than the sequence illustrated or described herein. In addition, objects distinguished from "first" and "second" are generally one type, and do not limit a quantity of objects. For example, the first object may be one or more. In addition, "or" in this application indicates at least one of connected objects. For example, "A or B" covers three solutions, that is, Solution 1: A is included and B is excluded; Solution 2: B is included and A is excluded; and Solution 3: Both A and B are included. A character "/" generally indicates an "or" relationship between associated objects.

A term "indicate" in this application may be a direct indication (or an explicit indication), or may be an indirect indication (or an implicit indication). The direct indication may be understood as that in a sent indication, a sender explicitly notifies a receiver of content such as specific information, an operation that needs to be performed, or a requesting result; and the indirect indication may be understood as that the receiver determines, based on the indication sent by the sender, corresponding information, or performs determining and determines the operation that needs to be performed or the requesting result based on a determining result.

It should be noted that the technology described in the embodiments of this application is not limited to a long term evolution (Long Term Evolution, LTE)/LTE-advanced (LTE-Advanced, LTE-A) system, and may be further applied to another wireless communication system, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. Terms "system" and "network" in the embodiments of this application are generally used interchangeably, and the described technology may be applied to the system and radio technology mentioned above, or may be applied to other systems and radio technologies. The following descriptions describe a new radio (New Radio, NR) system for a purpose of an example, and an NR term is used in most of the following descriptions. However, the technologies may alternatively be applied to a system other than the NR system, for example, a 6^{th} generation (6^{th} Generation, 6G) communication system.

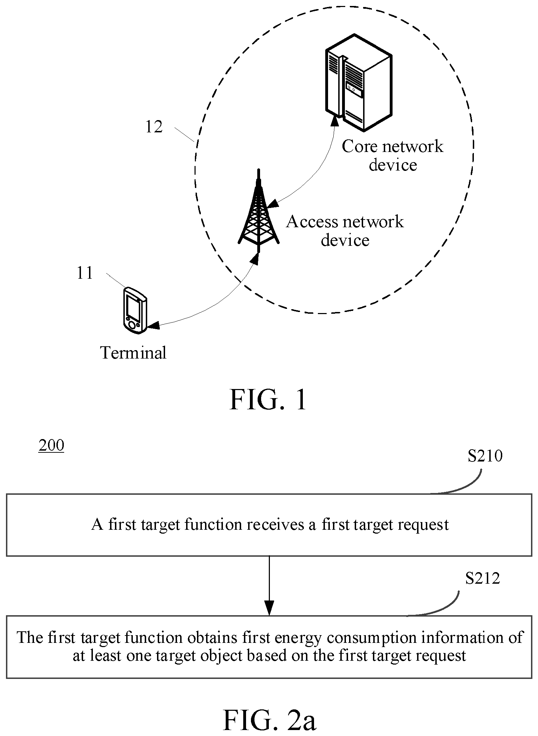

FIG. 1 is a block diagram of a wireless communication system to which an embodiment of this application may be applied. The wireless communication system includes a terminal 11 and a network side device 12. The terminal 11 may be a terminal side device, for example, a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), augmented reality (Augmented Reality AR), a virtual reality (Virtual Reality, VR) device, a robot, a wearable device (Wearable Device), a flight vehicle (flight vehicle), a vehicle user equipment (Vehicle User Equipment, VUE), a ship-mounted device, a pedestrian user equipment (Pedestrian User Equipment, PUE), a smart household (a household device having a wireless communication function like a refrigerator, a television, a washing machine, or furniture), a game console, a personal computer (Personal Computer, PC), an automated teller machine, or a self-service machine. The wearable device includes: a smartwatch, a smart band, smart earphones, smart glasses, smart jewelry (a smart bracelet, a smart chain bracelet, a smart ring, a smart necklace, a smart anklet, a smart chain anklet, or the like), a smart wristband, smart clothing, or the like. The vehicle user equipment may also be referred to as a vehicle terminal, a vehicle controller, a vehicle module, a vehicle component, a vehicle chip, a vehicle unit, or the like. It should be noted that in this embodiment of this application, a specific type of the terminal 11 is not limited. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a node B (Node B, NB), an evolved node B (Evolved Node B, eNB), a next generation Node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP) or another appropriate term in the art, as long as the same technical effect is achieved. The base station is not limited to a specific technical term. It should be noted that in this embodiment of this application, a base station in the NR system is merely used as an example for description, and a specific type of the base station is not limited.

The core network device may also be referred to as a core network node, a core network function, a core network element, or the like, and includes but is not limited to at least one of the following: a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in this embodiment of this application, a core network function in the NR system is merely used as an example for description, and a specific type of the core network function is not limited. In a case that a name of the core network function mentioned in this embodiment of this application in a subsequent protocol version (for example, 6G) changes, the core network function also falls within the protection scope of this application.

The following describes an energy consumption information obtaining solution provided in the embodiments of this application in detail through some embodiments and application scenarios thereof with reference to the accompanying drawings.

FIG. 2a is a schematic flowchart of an energy consumption information obtaining method according to an embodiment of this application. A method 200 may be performed by a first target function, that is, the first target function is a function configured to perform the method 200. In a possible implementation, the first target function may be referred to as an energy efficiency network function (Energy Efficiency Network Function, EE NF). In other words, the method may be performed by software or hardware installed on the first target function. As shown in FIG. 2a, the method may include the following steps.

S210: The first target function receives a first target request.

In this embodiment of this application, the first target request is used for requesting to obtain energy consumption information of at least one target object. Optionally, the at least one target object may be an object corresponding to a same application service (Application Service, AS).

Optionally, the first target function may receive a first target request sent by a NEF. For example, an application function (Application Function, AF) may send the first target request to the first target function through the NEF. Alternatively, the first target function may directly receive the first target request sent by the AF, that is, the AF directly sends the first target request to the first target function.

S212: The first target function obtains first energy consumption information of the at least one target object based on the first target request.

For example, the first target function may monitor energy consumption of the at least one target object, to obtain the first energy consumption information of the at least one target object.

In this embodiment of this application, the first target function may obtain a data volume of the at least one target object. For example, the data volume of the at least one target object is obtained from a UPF through an SMF, and the first energy consumption information of the at least one target object is obtained through calculation based on the data volume of the at least one target object.

The target object includes one of the following: single network slice selection assistance information (Single Network Slice Selection Assistance information, S-NSSAI), a data network name (Data Network Name, DNN), a single application (Application, APP), a single network communication service (Communication service), and a single terminal (UE).

Optionally, the first target request carries at least one of the following:
(1) An event identifier (Event ID), used for indicating a monitoring target, where the monitoring target includes at least one of the following: a total energy consumption amount, a maximum energy consumption value, and an energy consumption credit limit (Energy Credit Limit). The event identifier may be used for indicating the first target function to monitor a total energy consumption amount or a maximum energy consumption value of the at least one target object or monitor whether the total energy consumption amount of the at least one target object reaches the energy consumption credit limit.
(2) An event filtering indication (Event Filter), used for indicating an application function (AF) or an application identifier (APP ID) that needs to be reported. Based on the event filtering indication, the first target function may learn of an energy consumption monitoring result corresponding to a specific application function or application identifier that needs to be reported.
(3) Event reporting information (Event Reporting info), used for indicating a sending manner of energy consumption information, where the sending manner includes at least one of the following: single sending, periodic sending, and conditional sending. A sending manner of energy consumption information of a first EE NF may be indicated based on the event reporting information. The single sending means that the first EE NF monitors the first energy consumption information of the at least one target object after receiving the first target request, and then sends a monitoring result based on the obtained first energy consumption information. The monitoring ends. The periodic sending means that the first EE NF continuously monitors the first energy consumption information of the at least one target object, and sends a monitoring result of this period when a monitoring periodicity arrives. Optionally, in a case that the sending manner indicated by the event reporting information is the periodic sending, the event reporting information may include information such as sending start time, a sending periodicity, sending end time, and a monitoring time period. The conditional sending means that a monitoring result is sent in a case that it is detected that the first energy consumption information of the at least one target object meets a sending threshold. The sending threshold may be carried in the first target request. For example, the sending threshold may be the foregoing energy consumption credit limit or another value carried in the first target request. Alternatively, the sending threshold may be preconfigured in the first EE NF.
(4) Identification information of the at least one target object, such as an application identifier (APP ID), an application function identifier (AR ID), S-NSSAI, a DNN, and a UE ID. Based on the identification information of the at least one target object, the first EE NF may learn of an object that needs to be monitored.

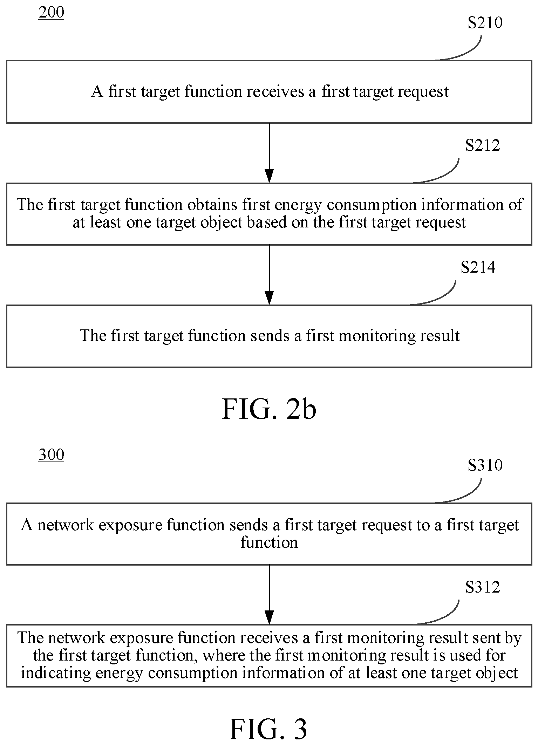

In an optional implementation, as shown in FIG. 2b, the method may further include: S214: The first target function sends a first monitoring result.

The first monitoring result is used for indicating the energy consumption information of the at least one target object. For example, the first monitoring result may be the total energy consumption amount of the at least one target object or the maximum energy consumption value of the at least one target object. Alternatively, the first monitoring result may be confirmation information, used for indicating that the total energy consumption amount of the at least one target object or the maximum energy consumption value of the at least one target object exceeds the sending threshold.

In the foregoing implementation, the first target function may send the first monitoring result based on the first energy consumption information obtained by monitoring the at least one target object.

In this embodiment of this application, in an implementation, the first target function may send the first monitoring result to the NEF. The NEF transparently transmits the first monitoring result to the AF, or the NEF performs certain processing based on the first monitoring result and then transmits a second monitoring result to the AF. In another implementation, the first target function may alternatively directly send the first monitoring result to the AF.

In this embodiment of this application, after receiving the first target request, the first target function may obtain the first energy consumption information of the at least one target object, and send the first monitoring result based on the obtained energy consumption information, thereby implementing energy consumption monitoring on the at least one target object.

In an implementation, that the first target function sends the first monitoring result may include: performing, by the first target function, statistics collection based on the obtained first energy consumption information, and sending the confirmation information in a case of determining that the total energy consumption amount or the maximum energy consumption value of the at least one target object meets a first sending threshold, where the confirmation information is used for indicating that the total energy consumption amount or the maximum energy consumption value of the at least one target object meets the first sending threshold. For example, in a case that the sending manner is the conditional sending, the first target function may send the first monitoring result when the total energy consumption amount or the maximum energy consumption value of the obtained first energy consumption information reaches the first sending threshold. The first monitoring result includes the confirmation information, and the confirmation information is used for indicating that the total energy consumption amount or the maximum energy consumption value of the at least one target object meets the first sending threshold.

In another implementation, that the first target function sends the first monitoring result may include: performing, by the first target function, statistics collection based on the obtained first energy consumption information, and sending, in a case that a sending periodicity arrives, a total energy consumption amount or a maximum energy consumption value corresponding to the at least one target object in a current periodicity. For example, in a case that the sending manner is the periodic sending, the first EE NF may periodically perform statistics collection on the obtained first energy consumption information, and send the total energy consumption amount or the maximum energy consumption value of the at least one target object in the current periodicity.

In an implementation, in a case that the at least one target object includes a plurality of target objects, each target object may correspond to one sending threshold, that is, a second sending threshold. Therefore, that the first target function sends the first monitoring result to the network exposure function includes: performing, by the first target function, statistics collection based on the obtained first energy consumption information, and sending confirmation information to the network exposure function in a case of determining that a total energy consumption amount or a maximum energy consumption value corresponding to any target object exceeds the second sending threshold, where the confirmation information is used for indicating that the total energy consumption amount or the maximum energy consumption value corresponding to the target object exceeds the second sending threshold, and the second sending threshold is a sending threshold corresponding to the target object. For example, in a case that the sending manner is the conditional sending, the first target request may carry a plurality of second sending thresholds, and each second sending threshold corresponds to one target object. In a case of detecting that a total energy consumption amount or a maximum energy consumption value of a target object exceeds the second sending threshold corresponding to the target object, the first target function sends the confirmation information indicating that the total energy consumption amount or the maximum energy consumption value of the target object exceeds the second sending threshold. In this implementation, a sending threshold may be set for each target object, so that sending may be performed in a case that a total energy consumption amount or a maximum energy consumption value corresponding to a target object is relatively high. In this way, the AF may adjust a service corresponding to the target object.

In an implementation, the at least one target object may include a target object managed by another EE NF. Therefore, in this implementation, after receiving the first target request, the first EE NF may further send a second target request to a second target function, where the second target request carries identification information of a target object corresponding to the second target function, and the second target function is a target function other than the first target function. For example, the at least one target object includes a DNN 1 and a DNN 2. The DNN 1 corresponds to the first target function, and the DNN 2 corresponds to the second target function. After receiving the first target request, the first target function may further send the second target request to the second target function, where the second target request may carry identification information of the DNN 2, and is used for requesting the second target function to expose energy consumption information of the DNN 2; and then receive third energy consumption information sent by the second target function.

In the foregoing implementation, the first target function may be a predetermined target function in a plurality of target functions corresponding to a plurality of target objects, for example, a specified target function in the plurality of target functions, which may be referred to as a central target function.

In the foregoing implementation, optionally, the first energy consumption information may include second energy consumption information obtained by the first target function and third energy consumption information obtain by the second target function, and the first target function sends the first monitoring result based on the second energy consumption information and the third energy consumption information.

In the foregoing implementation, optionally, the first target request may carry identifiers of the target functions corresponding to the plurality of target objects, and the target functions corresponding to the plurality of target objects include the first target function and the second target function.

In an implementation, the first target request received by the first target function may be the first target request from a third target function. The first target request may carry identification information of the at least one target object. The at least one target object carried in the first target request may be a target object corresponding to the first target function. When sending the first monitoring result, the first target function may send the first monitoring result obtained by the first target function to the third target function. For example, the third target function may be the foregoing central target function.

In the foregoing implementation, the first monitoring result may be a total energy consumption amount or a maximum energy consumption value obtained by the first target function, or may be confirmation information, that is, confirmation information indicating that the total energy consumption amount or the maximum energy consumption value obtained by the first target function reaches a sending threshold.

In the foregoing implementation, optionally, the first target request carries event reporting information, and a sending manner of the energy consumption information indicated by the event reporting information includes at least one of the following: periodic sending and conditional sending, where the conditional sending is sending in a case that a total energy consumption amount or a maximum energy consumption value corresponding to the target object exceeds a third sending threshold.

Optionally, in a case that the sending manner of the energy consumption information indicated by the event reporting information indicates the conditional sending, the first target request further carries the third sending threshold. The third sending threshold may be a sending threshold corresponding to the target object corresponding to the first target function.

According to the foregoing technical solution provided in the embodiments of this application, an energy use value or a maximum energy consumption value of at least one target object may be monitored by a target function, and when a sending requirement of an exposure event is reached, exposure of network energy consumption information may be performed.

Based on the same technical concept, an embodiment of this application further provides an energy consumption information requesting method.

FIG. 3 is a schematic flowchart of an energy consumption information requesting method according to an embodiment of this application. A method 300 may be performed by a network exposure function. In other words, the method may be performed by software or hardware installed on the network exposure function. As shown in FIG. 3, the method may include the following steps.

S310: The network exposure function sends a first target request to a first target function.

In this embodiment of this application, the first target request may be used for requesting first energy consumption information of at least one target object. Optionally, the target object includes one of the following: S-NSSAI, a DNN, a single application, a single network communication service, and a single terminal.

Optionally, the first target request carries at least one of the following:
(1) An event identifier, used for indicating a monitoring target, where the monitoring target includes at least one of the following: a total energy amount, a maximum energy consumption value, and a maximum energy consumption limit.
(2) An event filtering indication, used for indicating an application function (AF) or an application identifier (APP ID) that needs to be reported.
(3) Event reporting information, used for indicating a sending manner of energy consumption information, where the sending manner includes at least one of the following: single sending, periodic sending, and conditional sending.
(4) Identification information of the at least one target object.

The first target request is the same as the first target request in the method 200. For details, refer to related descriptions in the method 200.

In an implementation, after receiving an energy consumption information obtaining request sent by an application function, the network exposure function may send the first target request to the first target function.

Optionally, the energy consumption information obtaining request may carry at least one of the following:
(1) An event identifier, used for indicating a monitoring target, where the monitoring target includes at least one of the following: a total energy amount, a maximum energy consumption value, and a maximum energy consumption limit.
(2) An event filtering indication, used for indicating an application function (AF) or an application identifier (APP ID) that needs to be reported.
(3) Event reporting information, used for indicating a sending manner of energy consumption information, where the sending manner includes at least one of the following: single sending, periodic sending, and conditional sending.
(4) Identification information of the at least one target object.

In this embodiment of this application, information carried in the energy consumption information obtaining request and information carried in the first target request may be the same. To be specific, a NEF may transparently transmit the energy consumption information obtaining request sent by the AF to the first target function. Alternatively, the information carried in the energy consumption information obtaining request and the information carried in the first target request may not be completely the same. For example, when a plurality of target objects are included, and EE NFs corresponding to the plurality of target objects are not completely the same, the NEF may carry identification information of target objects corresponding to target functions in the first target request, that is, may include only identification information of some target objects carried in the energy consumption information obtaining request.

In an optional implementation, as shown in FIG. 3, the method may further include: S312: The network exposure function receives a first monitoring result sent by the first target function, where the first monitoring result is used for indicating energy consumption information of the at least one target object.

The first target function may send the first monitoring result according to the implementations in the method 200. For details, refer to related descriptions in the method 200.

In this embodiment of this application, when the network exposure function receives the energy consumption information obtaining request sent by the AF, after S312, the network exposure function may further send a second monitoring result to the application function based on the first monitoring result. For example, the network exposure function may transparently transmit the first monitoring result to the AF, or the network exposure function may process the first monitoring result and then send the second monitoring result to the AF.

In an implementation, that the network exposure function sends the first target request to the first target function may include the following steps.

Step 1: The network exposure function determines target functions corresponding to target objects.

For example, the NEF may obtain EE NFs corresponding to the target objects by querying in an NRF.

Step 2: The network exposure function sends the first target request to the determined first target function in a case that a target function corresponding to the at least one target object is the first target function.

In the foregoing implementation, at least one target object corresponding to at least one application service may belong to a same EE NF. Therefore, the NEF may send the first target request to the EE NF (that is, a first EE NF).

In another implementation, that the network exposure function sends the first target request to the first target function may include the following steps:
Step 1: The network exposure function determines target functions corresponding to target objects.
Step 2: The network exposure function sends the first target request to the first target function in a case that a target function corresponding to the at least one target object is not completely the same, where the first target function is a predetermined target function in a plurality of target functions corresponding to the plurality of target objects.

In the foregoing implementation, at least one target object corresponding to at least one application service may belong to a plurality of target functions. The NEF may send the first target request to one of the plurality of target functions (that is, the first target function). The first target function may be the predetermined target function in the plurality of target functions, for example, a specified central target function. The first target function sends a target request to another target function.

In the foregoing implementation, the predetermined target function may correspond to one or more target objects in the at least one target object, or may not correspond to any target object. In the former case, the predetermined target function may perform energy consumption monitoring on the corresponding target object. In the latter case, the predetermined target function may not perform energy consumption monitoring, and is only responsible for sending the target request and aggregating energy consumption information.

In the foregoing implementation, in a case of the conditional sending, the plurality of target objects may correspond to one sending threshold, and the first target request may carry the sending threshold. For example, one sending threshold is set for one application service, or one energy consumption credit limit is set for one application service. Alternatively, one sending threshold may be set for each target object, and the first target request carries the sending threshold corresponding to each target object.

In still another implementation, that the network exposure function sends the first target request to the first target function may include:
Step 1: The network exposure function determines target functions corresponding to target objects.
Step 2: The network exposure function separately sends the first target request to the first target function and a second target function in a case that a target function corresponding to the at least one target object is not completely the same, where the first target function and the second target function are different target functions in a plurality of target functions corresponding to a plurality of target objects.

In the foregoing implementation, at least one target object corresponding to at least one application service may belong to a plurality of EE NFs, and the NEF may separately send a target request to target functions (that is, the first target function).

In the foregoing implementation, the first target request and the second target request carry the event reporting information, and the sending manner of the energy consumption information indicated by the event reporting information includes at least one of the following: the single sending, the periodic sending, and the conditional sending. Optionally, in a case that the sending manner is the periodic sending, sending periodicity information may be further carried. In a case that the sending manner is the conditional sending, a sending threshold, for example, a sending threshold corresponding to the plurality of target objects, or the sending threshold corresponding to each target object, may be further carried. For example, the first target request sent to the first target function carries a first sending threshold, where the first sending threshold is a sending threshold corresponding to a target object corresponding to the first target function; and the second target request sent to the second target function carries a second threshold, where the second threshold is a sending threshold corresponding to a target object corresponding to the second target function.

In the foregoing implementation, optionally, that the network exposure function receives the first monitoring result sent by the first target function includes: receiving, by the network exposure function, third energy consumption information obtained by the first target function by performing energy consumption monitoring on a target object corresponding to an identifier of the first target function.

Further, the method may further include the following steps.

Step 1: The network exposure function receives second energy consumption information obtained by the second target function by performing energy consumption monitoring on a target object corresponding to an identifier of the second target function.

Step 2: The network exposure function sends, based on the second energy consumption information and the third energy consumption information, the second monitoring result to the application function based on the event reporting information carried in the energy consumption information obtaining request, where the second monitoring result is used for indicating the energy consumption information of the at least one target object.

In the foregoing optional implementation, the NEF aggregates the energy consumption information, and when a sending threshold is reached or a sending periodicity arrives, the NEF sends the second monitoring result to the AF.

According to the technical solution provided in this embodiment of this application, an EE NF may expose an energy consumption monitoring result to an AF through a NEF by using an event exposure manner, so that the AF may perform corresponding service adjustment based on the monitoring result.

Based on the same technical concept, an embodiment of this application further provides another energy consumption information requesting method.

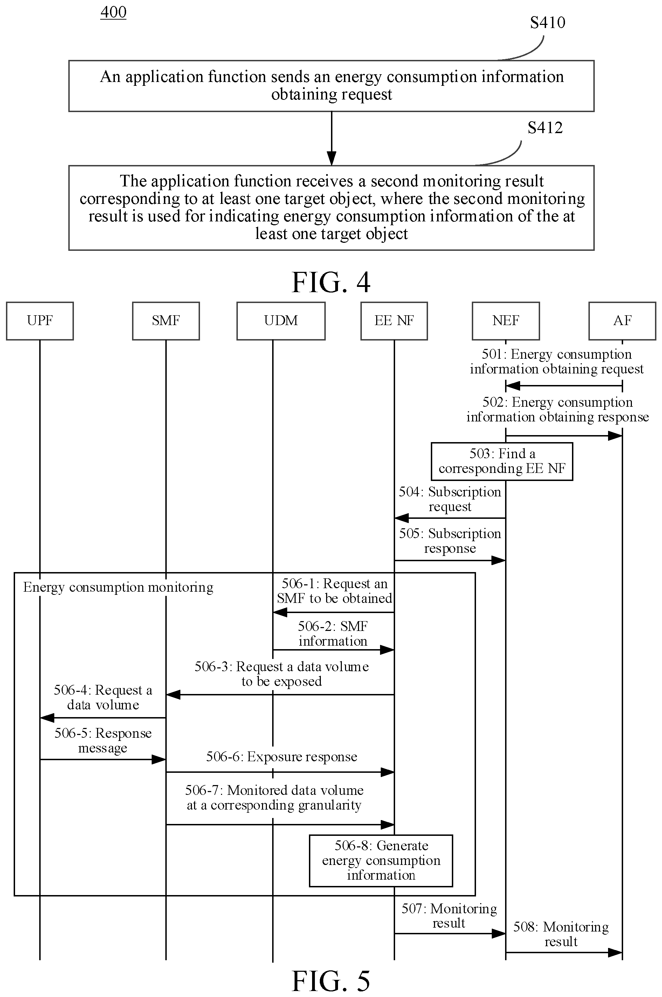

FIG. 4 is another schematic flowchart of an energy consumption information requesting method according to an embodiment of this application. A method 400 may be performed by an AF. In other words, the method may be performed by software or hardware installed on the AF. As shown in FIG. 4, the method may include the following steps.

S410: The application function sends an energy consumption information obtaining request.

The energy consumption information obtaining request is used for requesting energy consumption information of at least one target object to be obtained, and the target object includes one of the following: S-NSSAI, a DNN, a single application, a single network communication service, and a single terminal. Optionally, the at least one target object may be a target object corresponding to a same application service.

The energy consumption information obtaining request is the same as the energy consumption information obtaining request in the method 300. For details, refer to related descriptions in the method 300.

Optionally, the energy consumption information obtaining request may carry at least one of the following:
(1) An event identifier, used for indicating a monitoring target, where the monitoring target includes at least one of the following: a total energy amount, a maximum energy consumption value, and an energy consumption credit limit.
(2) An event filtering indication, used for indicating an application function or an application identifier that needs to be reported.
(3) Event reporting information, used for indicating a sending manner of energy consumption information, where the sending manner includes at least one of the following: single sending, periodic sending, and conditional sending.
(4) Identification information of the at least one target object.

Optionally, in a case that the sending manner includes the conditional sending, the energy consumption information obtaining request further may carry a sending threshold corresponding to the conditional sending.

Optionally, the energy consumption information obtaining request carries a plurality of sending thresholds, and different target objects correspond to sending thresholds that are not completely the same.

In an optional implementation, as shown in FIG. 4, the method may further include: S412: The application function receives a second monitoring result corresponding to the at least one target object, where the second monitoring result is used for indicating the energy consumption information of the at least one target object.

According to the technical solution provided in this embodiment of this application, an AF provides information about a maximum energy credit value that can be used by a current application service, requests network functions such as a NEF and an EE NF to monitor a network energy use value or a network maximum energy consumption value according to a requirement, and when a sending requirement of an exposure event is reached, exposure of network energy consumption information is performed.

In this embodiment of this application, an Energy Credit for a specific application may be defined in an exposure scenario as a total energy amount or a maximum energy consumption EC value that can be used by an AS. When the total energy amount or the maximum value is exceeded, a network may use the NEF to expose the Energy Credit to a third-party AF through event exposure, and then the AF may perform corresponding service adjustment.

In this embodiment of this application, an energy consumption condition of an application service is monitored by an independent energy consumption network element EE NF or a core network function like a NEF, and related information such as current network energy consumption is exposed to the outside through a network event exposure procedure. After the AF initiates an exposure request, optionally, the NEF has an AS service mapping capability, and may find, through a service discovery procedure, an EE NF function of a slice or a DNN corresponding to a service, for performing an energy consumption monitoring and exposure operation. In addition, the NEF may further aggregate related data volume information and energy consumption information corresponding to a plurality of slices or DNNs used by the application service.

The following describes technical solutions provided in the embodiments of this application through specific embodiments.

FIG. 5 is a schematic flowchart of an energy consumption information monitoring method according to an embodiment of this application. As shown in FIG. 5, the method mainly includes the following steps.

Step 501: An AF sends an energy consumption information obtaining request (for example, an Nnef_EventExposure subscribe/unsubscribe request message) to a NEF. The request message is used for requesting energy consumption information of an application service to be obtained, and the request message may carry at least one of an Event ID, an Event Filter, Event Reporting info, S-NSSAI, a DNN, an AF ID, and an APP ID.

The following provides descriptions.

Event ID: a subscribed event ID, used for indicating a monitoring target. In other words, a total energy amount, a maximum energy consumption value, or an energy consumption credit limit is monitored.

Event Filter: defines an AF that needs to be reported, for example, an AF ID or an APP ID.

Event Reporting info: a sending manner or a sending condition, including conditional sending based on a provided threshold and periodic sending. Optionally, the threshold is obtained by the AF and carried in the foregoing request message, or may be configured in an EE NF in advance.

S-NSSAI/DNN/APP ID/AF ID: identification information of an object corresponding to an application service provided by the AF.

Step 502: The NEF sends an energy consumption information obtaining response message (for example, an Nnef_EventExPosure subscribe/unsubscribe response message) to the AF, and confirms to expose an event subscription.

Step 503: The NEF performs querying in an NRF, to find an EE NF that manages or processes the corresponding S-NSSAI/DNN.

Step 504: The NEF sends a subscription request (for example, the Nnef_EventExposure subscribe/unsubscribe request message) of subscribing to an event exposure (event exposure) service of the EE NF to the EE NF.

Step 505: The EE NF returns a subscription response (for example, the Nnef_EventExPosure subscribe/unsubscribe response message) to the NEF.

Step 506: The EE NF performs monitoring based on a threshold limit and a sending condition provided in step 501.

Specifically, the EE NF may collect an energy use condition of an application by using the following steps. monitoring and information collection methods performed by the EE NF in subsequent embodiments may include the following steps.

Step 506-1: The EE NF requests a UDM to obtain an SMF corresponding to a UE/DNN/S-NSSAI by, for example, calling a UDM_UECM_get service.

Step 506-2: The EE NF obtains returned SMF information (for example, an SMF Set ID or an SMF IP address).

Step 506-3: The EE NF requests the SMF to expose a data volume of the application, where a request may carry one or more of the following messages:

Event (Event): a QoS flow data volume (QoS Flow data volume) or a PDU session data volume (PDU Session data volume).

PDU session ID (PDU session id) in a case that a monitoring granularity is a PDU level.

Target UE ID: used for indicating a monitored target UE. In other words, a data volume of the target UE is monitored.

APP ID: used for indicating a monitored application.

S-NSSAI: used for indicating a monitored slice.

DNN: used for indicating a monitored DNN.

Step 506-4: The SMF selects a UPF to which a current application belongs, and sends a request to the UPF, to notify the UPF of a data volume (including but not limited to a sending periodicity, a sending type, and the like) requested for statistics collection. For example, the SMF sends an N4 session modification (N4 session modification) request to the UPF.

Step 506-5: The UPF sends a corresponding response message to the SMF.

The UPF performs statistics collection on a data volume per pdu or per qos flow by using a UserDataUsageMeasure event (event) of a UPF Exposure service, and returns the data volume to the SMF.

Step 506-6: The SMF sends an exposure response to the EE NF.

Step 506-7: The SMF returns a monitored data volume at the corresponding granularity according to a requirement.

Step 506-8: The EE NF generates energy consumption information, and has an interface with operations, administration, and management (OA&M) to obtain energy consumption data of a slice in which a current terminal is located. An energy consumption calculation method thereof is as follows:

EC (PDU level or QoS level)=Slice level Energy Consumption*(PDU or QoS data volume/Slice data volume)

EC (PDU level or QoS level) is energy consumption at the PDU level or THE QoS level, Slice level Energy Consumption is the energy consumption data of the slice, PDU or QoS data volume is a data volume of a PDU or a QoS, and Slice data volume is a data volume of the slice.

Step 507: The EE NF sends a monitoring result to the NEF when collected energy consumption information reaches a threshold.

If the sending is threshold sending, the EE NF sends confirmation information indicating that a NEF condition is met.

If the sending is the periodic sending, the EE NF sends a total energy amount or a maximum energy consumption value of a current AS.

Step 508: The NEF sends the monitoring result to the AF.

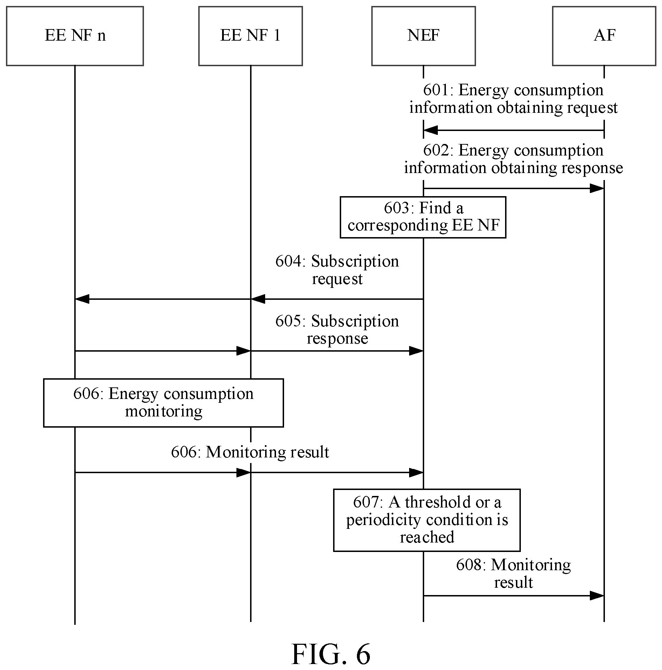

FIG. 6 is still another schematic flowchart of an energy consumption information monitoring method according to an embodiment of this application. In this embodiment, one service flow may include a plurality of pdu sessions/QoS flows, which are mapped to a plurality of EE NFs (for example, including a plurality of S-NSSAI/DNNs). As shown in FIG. 6, the method mainly includes the following steps.

Step 601: An AF sends an energy consumption information obtaining request (for example, an Nnef_EventExposure subscribe/unsubscribe request message) to a NEF, where the request message carries at least one of an Event ID, an Event Filter, Event Reporting info, S-NSSAI, and a DNN.

Event ID: a subscribed event ID. In other words, a total monitoring energy amount, a maximum energy consumption value, or an energy consumption credit limit.

Event Filter: defines an AF that needs to be reported, for example, an AF ID or an APP ID.

Event Reporting info: a sending manner or a sending condition, including threshold sending based on a provided threshold and periodic sending. Optionally, the threshold or a threshold limit is obtained by the AF, or may be configured in an EE NF in advance.

S-NSSAI/DNN/APP ID/AG ID: corresponding application information provided by the AF.

Step 602: The NEF sends an energy consumption information obtaining response to the AF, and confirms to expose an event subscription.

Step 603: The NEF performs querying in an NRF, to find an EE NF that manages or processes the corresponding S-NSSAI/DNN. The NEF may find that a list of EE NFs corresponds to different S-NSSAI and DNNs.

Steps 604 and 605: The NEF subscribes to an event exposure service of the EE NF.

Different from step 601, Event Reporting Info in step 604 is defined in a manner of only single sending or the periodic sending.

Step 606: The EE NF performs monitoring based on the event reporting information provided in step 604, and sends a monitoring result.

Step 607: The NEF aggregates energy consumption information, so that the threshold or a periodicity condition provided in step 601 is reached.

Step 608: The NEF sends the monitoring result to the AF.

If the sending is the threshold sending, the NEF sends confirmation information indicating that a threshold condition is met.

If the sending is the periodic sending, the NEF sends a total energy amount or a maximum energy consumption value correspondingly used by a current AS.

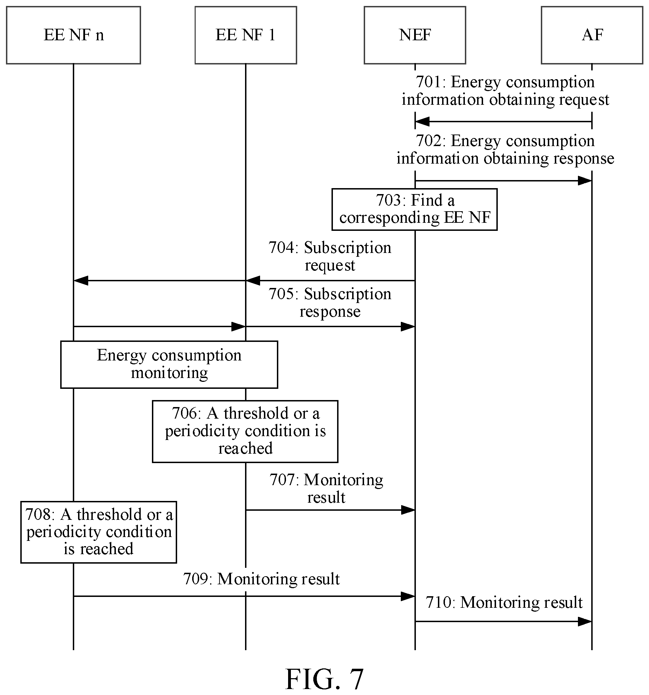

FIG. 7 is still another schematic flowchart of an energy consumption information sending method according to an embodiment of this application. In this embodiment, one service flow includes a plurality of PDU sessions/QoS flows mapped to a plurality of EE NFs (for example, including a plurality of S-NSSAI/DNNs). A credit limit (credit) provided or configured by an AF is for per S-NSSAI or per DNN. As shown in FIG. 7, the method mainly includes the following steps.

Step 701: An AF sends an energy consumption information obtaining request (for example, an Nnef_EventExposure subscribe/unsubscribe request message) to a NEF, where the request message may carry at least one of an Event ID, an Event Filter, Event Reporting info, S-NSSAI, and a DNN.

The following provides descriptions.

Event ID: a subscribed event ID. In other words, a total energy amount or a maximum energy consumption value is monitored.

Event Filter: defines an AF that needs to be reported, for example, an AF ID.

Event Reporting info: a sending manner, including threshold sending and periodic sending.

It should be noted that when there are a plurality of slices or DNNs, a credit limit (credit) may be a one to one mapping (one to one mapping) relationship that provides a plurality of S-NSSAI/DNNs.

Step 702: The NEF confirms to expose an event subscription.

Step 703: The NEF performs querying in an NRF, to find an EE NF that manages or processes the corresponding S-NSSAI/DNN. The NEF may find that a list of EE NFs corresponds to different S-NSSAI and DNNs.

Steps 704 705: The NEF subscribes to an event exposure service of the EE NF.

Different from step 701, the NEF separately sends, based on the one to one mapping, Event Reporting Information of Slices or DNNs corresponding to different EE NFs, that is, a threshold or a maximum energy consumption value.

Steps 706 to 709: The EE NF separately performs monitoring based on a threshold limit provided in step 701, and sends a monitoring result to the NEF when the threshold limit is reached or periodically sends a monitoring result.

If the sending is the threshold sending, the EE NF sends, to the NEF, confirmation information indicating that a condition is met.

If the sending is the periodic sending, the EE NF sends a total energy amount or a maximum energy consumption value of a current AS.

Step 710: The NEF sends the monitoring result.

Optionally, similar to FIG. 6, the NEF may also perform aggregation. Information sent to the EE NF in step 704 includes only a sending manner, for example, the periodic sending or single sending. The NEF performs threshold/periodic sending control. Alternatively, when a threshold or a periodicity condition provided in step 701 is reached, the NEF exposes the monitoring result.

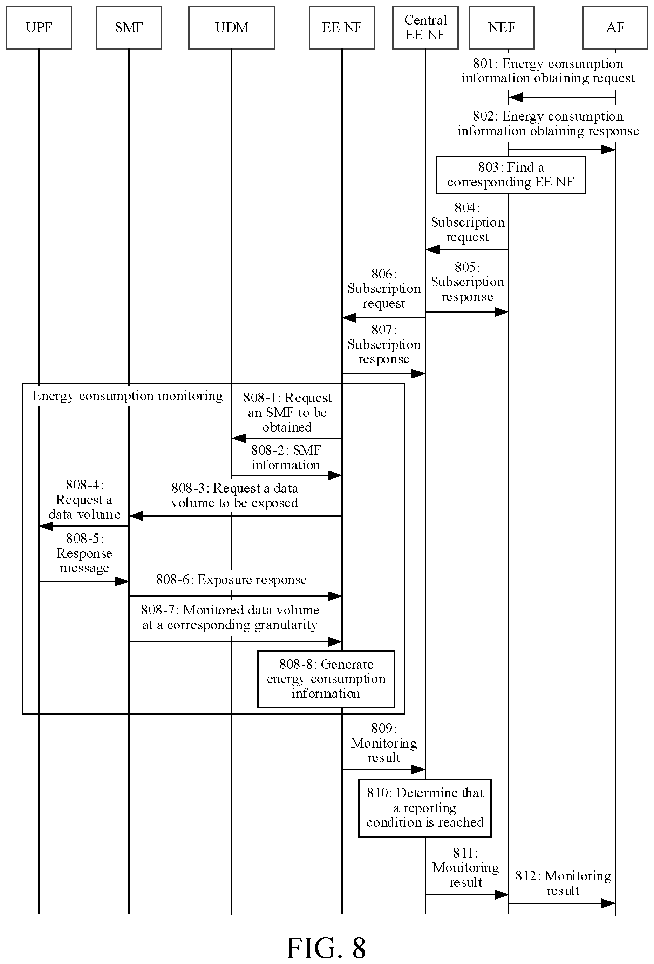

FIG. 8 is still another schematic flowchart of an energy consumption information monitoring method according to an embodiment of this application. In this embodiment, an EE NF is layered, where a central NF performs aggregation, and a distribute NF is only responsible for monitoring and sending. As shown in FIG. 8, the method mainly includes the following steps.

Steps 801 and 802 are the same as steps 701 and 702.

Step 803: A NEF performs querying in an NRF, to find an EE NF that manages or processes a corresponding S-NSSAI/DNN, where an obtained list of EE NFs includes a Central EE NF and a Distribute EE NF.

Steps 804 and 805: The NEF subscribes to an event exposure service of the Central EE NF.

Steps 806 and 807: The Central EE NF subscribes to an event exposure service of each Distribute EE NF in the list of EE NFs.

Steps 808-1 to 808-8: Each EE NF collects energy consumption information according to steps 506-1 to 506-8 in FIG. 5; and

Step 809: Each EE NF sends collected energy consumption information to the Central EE NF.

Step 810: The Central EE NF aggregates the energy consumption information collected by each EE NF, to determine that a sending condition is reached.

Step 811: The Central EE NF sends a monitoring result to the NEF.

If the sending is threshold sending, the Central EE NF sends confirmation information indicating that a threshold condition is met.

If the sending is periodic sending, the Central EE NF sends a total energy amount or a maximum energy consumption value correspondingly used by a current AS.

Step 812: The NEF sends the monitoring result to the AF.

According to the technical solution provided in this embodiment of this application, when an application service has a limit of an Energy Credit Limit, an energy consumption information monitoring operation at an application service granularity may be performed according to a requirement, and exposure is performed to the outside according to different third-party requirements.

An execution body of the energy consumption information obtaining method provided in the embodiments of this application may be an energy consumption information obtaining apparatus. In the embodiments of this application, the energy consumption information obtaining apparatus provided in the embodiments of this application is described by using an example in which the energy consumption information obtaining apparatus performs the energy consumption information obtaining method.

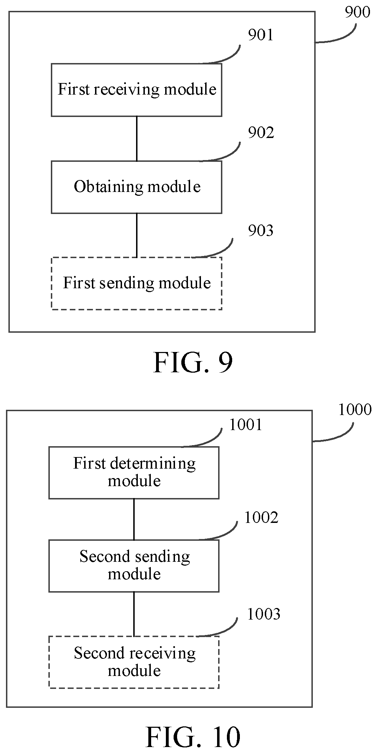

FIG. 9 is a schematic structural diagram of an energy consumption information obtaining apparatus according to an embodiment of this application. As shown in FIG. 9, an apparatus 900 mainly includes: a first receiving module 901 and an obtaining module 902.

In this embodiment of this application, the first receiving module 901 is configured to receive a first target request, where the first target request is used for requesting to obtain energy consumption information of at least one target object; and the obtaining module 902 is configured to obtain first energy consumption information of the at least one target object based on the first target request.

In an implementation, as shown in FIG. 9, the apparatus further includes: a first sending module 903, configured to send a first monitoring result, where the first monitoring result is used for indicating the energy consumption information of the at least one target object.

In an implementation, the target object includes one of the following: S-NSSAI, a DNN, a single application, a single network communication service, and a single terminal.

In an implementation, the first target request carries at least one of the following:
an event identifier, used for indicating a monitoring target, where the monitoring target includes at least one of the following: a total energy consumption amount, a maximum energy consumption value, and an energy consumption credit limit;
an event filtering indication, used for indicating an application function (AF) or an application identifier (APP ID) that needs to be reported;
event reporting information, used for indicating a sending manner of energy consumption information, where the sending manner includes at least one of the following: single sending, periodic sending, and conditional sending; and
identification information of the at least one target object.

In an implementation, the first sending module 901 is further configured to send a second target request to a second target function, where the second target request carries identification information of a target object corresponding to the second target function, and the second target function is a target function other than the first target function.

In an implementation, the first target request further carries identifiers of target functions corresponding to a plurality of target objects, and the target functions corresponding to the plurality of target objects include the first target function and the second target function.

In an implementation, the first energy consumption information includes second energy consumption information and third energy consumption information, the second energy consumption information is energy consumption information obtained by the second target function by performing energy consumption monitoring on the target object corresponding to the second target function, and the third energy consumption information is energy consumption information obtained by the first target function by performing energy consumption monitoring on a target object corresponding to the first target function.

In an implementation, the receiving the first target request includes: receiving, by the first target function, a first target request sent by a network exposure function; and the sending the first monitoring result includes: sending the first monitoring result to the network exposure function.

In an implementation, the sending the first monitoring result includes one of the following:
performing statistics collection based on the obtained first energy consumption information, and sending confirmation information in a case of determining that a total energy consumption amount or a maximum energy consumption value of the at least one target object meets a first sending threshold, where the confirmation information is used for indicating that the total energy consumption amount or the maximum energy consumption value of the at least one target object meets the first sending threshold; or
performing statistics collection based on the obtained first energy consumption information, and sending, in a case that a sending periodicity arrives, a total energy consumption amount or a maximum energy consumption value of the at least one target object in a current periodicity.

In an implementation, the sending the first monitoring result to the network exposure function includes:
performing statistics collection based on the obtained first energy consumption information, and sending confirmation information to the network exposure function in a case of determining that a total energy consumption amount or a maximum energy consumption value corresponding to any target object exceeds a second sending threshold, where the confirmation information is used for indicating that the total energy consumption amount or the maximum energy consumption value corresponding to the target object exceeds the second sending threshold, and the second sending threshold is a sending threshold corresponding to the target object.

In an implementation, the receiving the first target request includes: receiving a first target request sent by a third target function, where the first target request carries identification information of the target object; and
the sending the first monitoring result includes: sending the first monitoring result to the third target function.

In an implementation, the first target request carries event reporting information, and a sending manner of the energy consumption information indicated by the event reporting information includes at least one of the following: periodic sending and conditional sending, where the conditional sending is sending in a case that the total energy consumption amount or the maximum energy consumption value corresponding to the target object exceeds a third sending threshold.

In an implementation, in a case that the sending manner of the energy consumption information indicated by the event reporting information indicates the conditional sending, the first target request further carries the third sending threshold.

The energy consumption information obtaining apparatus provided in this embodiment of this application can implement processes implemented in the method embodiment in FIG. 2 and achieve same technical effects. To avoid repetition, details are not described herein again.

FIG. 10 is a schematic structural diagram of an energy consumption information requesting apparatus according to an embodiment of this application. As shown in FIG. 10, an apparatus 1000 includes: a first determining module 1001 and a second sending module 1002.

In this embodiment of this application, the first determining module 1001 is configured to determine that energy consumption information of at least one target object needs to be requested; and the second sending module 1002 is configured to send a first target request to a first target function, where the first target request is used for requesting the first target function to monitor first energy consumption information of the at least one target object corresponding to at least one application service.

In an implementation, as shown in FIG. 10, the apparatus may further include: a second receiving module 1003, configured to receive a first monitoring result sent by the first target function.

In an implementation, the first target request carries at least one of the following:
an event identifier, used for indicating a monitoring target, where the monitoring target includes at least one of the following: a total energy amount, a maximum energy consumption value, and a maximum energy consumption limit;
an event filtering indication, used for indicating an application function (AF) or an application identifier (APP ID) that needs to be reported;
event reporting information, used for indicating a sending manner of energy consumption information, where the sending manner includes at least one of the following: single sending, periodic sending, and conditional sending; and
identification information of the at least one target object.

In an implementation, the sending the first target request to the first target function includes: receiving an energy consumption information obtaining request sent by an application function, and sending the first target request to the first target function; and
the second sending module 1002 is further configured to send a second monitoring result to the application function based on the first monitoring result.

In an implementation, the energy consumption information obtaining request carries at least one of the following:
an event identifier, used for indicating a monitoring target, where the monitoring target includes at least one of the following: a total energy amount, a maximum energy consumption value, and a maximum energy consumption limit;
an event filtering indication, used for indicating an application function (AF) or an application identifier (APP ID) that needs to be reported;
event reporting information, used for indicating a sending manner of energy consumption information, where the sending manner includes at least one of the following: single sending, periodic sending, and conditional sending; and
identification information of the at least one target object.

In an implementation, the sending the first target request to the first target function includes:
determining target functions corresponding to target objects; and
sending the first target request to the determined first target function in a case that a target function corresponding to the at least one target object is the first target function.

In an implementation, the sending the first target request to the first target function includes:
determining target functions corresponding to target objects; and
sending the first target request to the first target function in a case that a target function corresponding to the at least one target object is not completely the same, where the first target function is a predetermined target function in a plurality of target functions corresponding to a plurality of target objects.

In an implementation, the sending the first target request to the first target function includes:
determining target functions corresponding to target objects; and
separately sending the first target request to the first target function and a second target function in a case that a target function corresponding to the at least one target object is not completely the same, where the first target function and the second target function are different target functions in a plurality of target functions corresponding to a plurality of target objects.

In an implementation, the first target request and the second target request carry the event reporting information, and the sending manner of the energy consumption information indicated by the event reporting information includes at least one of the following: the single sending, the periodic sending, and the conditional sending.

In an implementation, the receiving the first monitoring result sent by the first target function includes: receiving third energy consumption information obtained by the first target function by performing energy consumption monitoring on a target object corresponding to an identifier of the first target function;
the second receiving module 1003 is further configured to receive second energy consumption information obtained by the second target function by performing energy consumption monitoring on a target object corresponding to the identifier of the second target function; and
the second sending module 1002 is further configured to send, based on the second energy consumption information and the third energy consumption information, the second monitoring result to the application function based on the event reporting information carried in the energy consumption information obtaining request.

In an implementation, the plurality of target objects correspond to sending thresholds that are not completely the same; the first target request sent to the first target function carries a first sending threshold, where the first sending threshold is a sending threshold corresponding to a target object corresponding to the first target function; and the second target request sent to the second target function carries a second threshold, where the second threshold is a sending threshold corresponding to a target object corresponding to the second target function.

The energy consumption information requesting apparatus provided in this embodiment of this application can implement processes implemented in the method embodiment in FIG. 3 and achieve same technical effects. To avoid repetition, details are not described herein again.

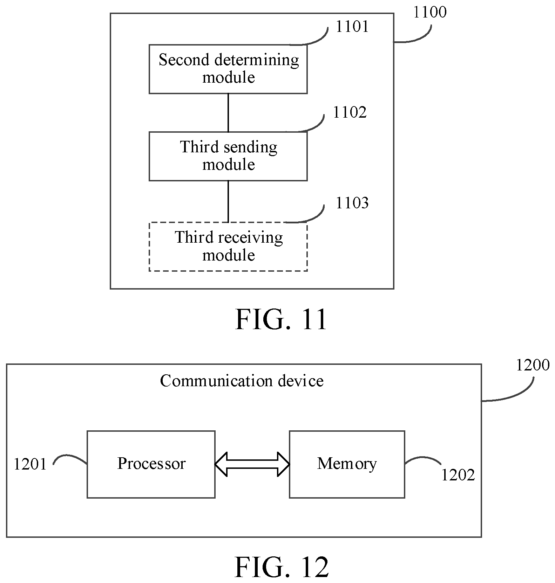

FIG. 11 is a schematic structural diagram of an energy consumption information requesting apparatus according to an embodiment of this application. As shown in FIG. 11, an apparatus 1100 mainly includes: a second determining module 1101 and a third sending module 1102.

In this embodiment of this application, the first determining module 1101 is configured to determine that energy consumption information of at least one target object needs to be requested; and the third sending module 1102 is configured to send an energy consumption information obtaining request, where the energy consumption information obtaining request is used for requesting the energy consumption information of the at least one target object corresponding to at least one application service to be obtained.

In an implementation, the target object includes one of the following: S-NSSAI, a DNN, a single application, a single network communication service, and a single terminal.

In an implementation, as shown in FIG. 11, the apparatus may further include: a third receiving module 1103, configured to receive a second monitoring result corresponding to the at least one target object.

In an implementation, the energy consumption information obtaining request carries at least one of the following:
an event identifier, used for indicating a monitoring target, where the monitoring target includes at least one of the following: a total energy amount, a maximum energy consumption value, and an energy consumption credit limit;
an event filtering indication, used for indicating an application function or an application identifier that needs to be reported;
event reporting information, used for indicating a sending manner of energy consumption information, where the sending manner includes at least one of the following: single sending, periodic sending, and conditional sending; and
identification information of the at least one target object.

In an implementation, in a case that the sending manner includes the conditional sending, the energy consumption information obtaining request further carries a sending threshold corresponding to the conditional sending.

In an implementation, the energy consumption information obtaining request carries a plurality of sending thresholds, and different target objects correspond to sending thresholds that are not completely the same.

The energy consumption information requesting apparatus provided in this embodiment of this application can implement processes implemented in the method embodiment in FIG. 4 and achieve same technical effects. To avoid repetition, details are not described herein again.

As shown in FIG. 12, an embodiment of this application further provides a communication device 1200, including a processor 1201 and a memory 1202. The memory 1202 stores a program or instructions runnable on the processor 1201. For example, when the communication device 1200 is a network side device, when the program or the instructions are executed by the processor 1201, steps of the foregoing method embodiments are implemented, and same technical effects can be achieved. To avoid repetition, details are not described herein again.

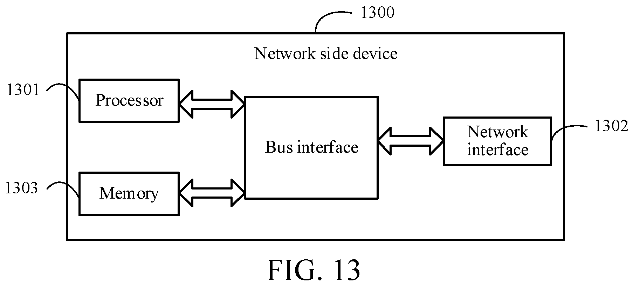

Specifically, an embodiment of this application further provides a network side device. As shown in FIG. 13, a network side device 1300 includes: a processor 1301, a network interface 1302, and a memory 1303. The network interface 1302 is, for example, a common public radio interface (common public radio interface, CPRI).

Specifically, the network side device 1300 in this embodiment of this application further includes: instructions or a program stored in the memory 1303 and runnable on the processor 1301. The processor 1301 calls the instructions or the program in the memory 1303 to perform methods performed by the modules shown in FIG. 9 to FIG. 11, and can achieve same technical effects. To avoid repetition, details are not described herein again.

An embodiment of this application further provides a readable storage medium. The readable storage medium stores a program or instructions. When the program or the instructions are executed by a processor, processes of the foregoing method embodiments are implemented, and same technical effects can be achieved. To avoid repetition, details are not described herein again.

The processor is the processor in the terminal in the foregoing embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions, to implement processes of the foregoing method embodiments, and can achieve same technical effects. To avoid repetition, details are not described herein again.

It should be understood that the chip described in this embodiment of this application may alternatively be referred to as a system-level chip, a system chip, a chip system, a system-on-a-chip, or the like.

An embodiment of this application further provides a computer program/program product. The computer program/program product is stored in a storage medium. The computer program/program product is executed by at least one processor to perform processes of the foregoing method embodiments, and can achieve same technical effects. To avoid repetition, details are not described herein again.

An embodiment of this application further provides a wireless communication system, including: a first target function, a NEF, and an AF. The first target function may be configured to perform steps of the foregoing energy consumption information obtaining method 200. The NEF may be configured to perform steps of the foregoing energy consumption information requesting method 300. The AF may be configured to perform steps of the foregoing energy consumption information requesting method 400.

In an implementation, the system further includes: a second target function, configured to perform method steps performed by the second target function in the foregoing method embodiments.

It should be noted that terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one..." does not exclude that there are still other same elements in the processes, methods, objects, or apparatuses. In addition, it should be noted that, the scope of the method and apparatus in the embodiments of this application is not limited to performing functions in a sequence shown or discussed, and may further include performing functions in a basically simultaneous manner or in a reverse sequence according to related functions. For example, the described methods may be performed in a sequence different from the described sequence, and various steps may be added, omitted, or combined. In addition, features described with reference to some examples may be combined in other examples.

Through the foregoing descriptions on the implementations, a person skilled in the art can clearly learn that the foregoing embodiment methods may be implemented by using a computer software product in combination with a necessary universal hardware platform, or by using hardware. The computer software product is stored in the storage medium (such as the ROM, the RAM, the magnetic disk, or the optical disc), and includes several instructions for instructing the terminal or the network side device to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. An energy consumption information obtaining method, comprising:
receiving, by a first target function, a first target request, wherein the first target request is used for requesting to obtain energy consumption information of at least one target object; and
obtaining, by the first target function, first energy consumption information of the at least one target object based on the first target request.

2. The method according to claim 1, wherein the method further comprises:
sending, by the first target function, a first monitoring result based on the obtained first energy consumption information of the at least one target object, wherein the first monitoring result is used for indicating the energy consumption information of the at least one target object.

3. The method according to claim 1 or 2, wherein the target object comprises at least one of the following: single network slice selection assistance information S-NSSAI, a data network name DNN, a single application, a single network communication service, and a single terminal.

4. The method according to any one of claims 1 to 3, wherein the first target request carries at least one of the following:
an event identifier, used for indicating a monitoring target, wherein the monitoring target comprises at least one of the following: a total energy consumption amount, a maximum energy consumption value, and an energy consumption credit limit;
an event filtering indication, used for indicating an application function identifier or an application identifier that needs to be reported;
event reporting information, used for indicating a sending manner of energy consumption information, wherein the sending manner comprises at least one of the following: single sending, periodic sending, and conditional sending; and
identification information of the at least one target object.

5. The method according to any one of claims 1 to 4, wherein after the receiving, by a first target function, a first target request, the method further comprises:
sending, by the first target function, a second target request to a second target function, wherein the second target request carries identification information of a target object corresponding to the second target function, and the second target function is a target function other than the first target function.

6. The method according to claim 5, wherein the first target request further carries identifiers of target functions corresponding to a plurality of target objects, and the target functions corresponding to the plurality of target objects comprise the first target function and the second target function.

7. The method according to claim 5, wherein the first energy consumption information comprises second energy consumption information and third energy consumption information, the second energy consumption information is energy consumption information obtained by the second target function by performing energy consumption monitoring on the target object corresponding to the second target function, and the third energy consumption information is energy consumption information obtained by the first target function by performing energy consumption monitoring on a target object corresponding to the first target function.

8. The method according to claim 2, wherein
the receiving, by a first target function, a first target request comprises: receiving, by the first target function, a first target request sent by a network exposure function; and
the sending, by the first target function, a first monitoring result comprises: sending, by the first target function, the first monitoring result to the network exposure function.

9. The method according to claim 2 or 8, wherein the sending, by the first target function, a first monitoring result comprises one of the following:
performing, by the first target function, statistics collection based on the obtained first energy consumption information, and sending confirmation information in a case of determining that a total energy consumption amount or a maximum energy consumption value of the at least one target object meets a first sending threshold, wherein the confirmation information is used for indicating that the total energy consumption amount or the maximum energy consumption value of the at least one target object meets the first sending threshold; or
performing, by the first target function, statistics collection based on the obtained first energy consumption information, and sending, in a case that a sending periodicity arrives, a total energy consumption amount or a maximum energy consumption value of the at least one target object in a current periodicity.

10. The method according to claim 2 or 8, wherein the sending, by the first target function, a first monitoring result comprises:
performing, by the first target function, statistics collection based on the obtained first energy consumption information, and sending confirmation information in a case of determining that a total energy consumption amount or a maximum energy consumption value corresponding to any target object exceeds a second sending threshold, wherein the confirmation information is used for indicating that the total energy consumption amount or the maximum energy consumption value corresponding to the target object exceeds the second sending threshold, and the second sending threshold is a sending threshold corresponding to the target object.

11. The method according to claim 2 or 8, wherein
the receiving, by a first target function, a first target request comprises: receiving, by the first target function, a first target request sent by a third target function, wherein the first target request carries identification information of the target object; and
the sending, by the first target function, a first monitoring result comprises: sending, by the first target function, the first monitoring result to the third target function.

12. The method according to claim 11, wherein the first target request carries event reporting information, and a sending manner of the energy consumption information indicated by the event reporting information comprises at least one of the following: periodic sending and conditional sending, wherein the conditional sending is sending in a case that a total energy consumption amount or a maximum energy consumption value corresponding to the target object exceeds a third sending threshold.

13. The method according to claim 12, wherein in a case that the sending manner of the energy consumption information indicated by the event reporting information indicates the conditional sending, the first target request further carries the third sending threshold.

14. An energy consumption information requesting method, comprising:
sending, by a network exposure function, a first target request to a first target function, wherein the first target request is used for requesting the first target function to obtain first energy consumption information of at least one target object.

15. The method according to claim 14, wherein the method further comprises:
receiving, by the network exposure function, a first monitoring result sent by the first target function, wherein the first monitoring result is used for indicating energy consumption information of the at least one target object.

16. The method according to claim 14 or 15, wherein the target object comprises one of the following: S-NSSAI, a DNN, a single application, a single network communication service, and a single terminal.

17. The method according to any one of claims 14 to 16, wherein the first target request carries at least one of the following:
an event identifier, used for indicating a monitoring target, wherein the monitoring target comprises at least one of the following: a total energy amount, a maximum energy consumption value, and a maximum energy consumption limit;
an event filtering indication, used for indicating an application function or an application identifier that needs to be reported;
event reporting information, used for indicating a sending manner of the energy consumption information, wherein the sending manner comprises at least one of the following: single sending, periodic sending, and conditional sending; and
identification information of the at least one target object.

18. The method according to claim 15, wherein
the sending, by a network exposure function, a first target request to a first target function comprises: receiving, by the network exposure function, an energy consumption information obtaining request sent by an application function, and sending the first target request to the first target function; and
the method further comprises: sending, by the network exposure function, a second monitoring result to the application function based on the first monitoring result.

19. The method according to claim 18, wherein the energy consumption information obtaining request carries at least one of the following:
an event identifier, used for indicating a monitoring target, wherein the monitoring target comprises at least one of the following: a total energy amount, a maximum energy consumption value, and a maximum energy consumption limit;
an event filtering indication, used for indicating an application function or an application identifier that needs to be reported;
event reporting information, used for indicating a sending manner of energy consumption information, wherein the sending manner comprises at least one of the following: single sending, periodic sending, and conditional sending; and
identification information of the at least one target object.

20. The method according to any one of claims 14 to 19, wherein the sending, by a network exposure function, a first target request to a first target function comprises:
determining, by the network exposure function, target functions corresponding to target objects; and
sending, by the network exposure function, the first target request to the determined first target function in a case that a target function corresponding to the at least one target object is the first target function.

21. The method according to any one of claims 14 to 19, wherein the sending, by a network exposure function, a first target request to a first target function comprises:
determining, by the network exposure function, target functions corresponding to target objects; and
sending, by the network exposure function, the first target request to the first target function in a case that a target function corresponding to the at least one target object is not completely the same, wherein the first target function is a predetermined target function in a plurality of target functions corresponding to a plurality of target objects.

22. The method according to any one of claims 14 to 19, wherein the sending, by a network exposure function, a first target request to a first target function comprises:
determining, by the network exposure function, target functions corresponding to target objects; and
separately sending, by the network exposure function, the first target request to the first target function and a second target function in a case that a target function corresponding to the at least one target object is not completely the same, wherein the first target function and the second target function are different target functions in a plurality of target functions corresponding to a plurality of target objects.

23. The method according to claim 22, wherein the first target request and the second target request carry the event reporting information, and the sending manner of the energy consumption information indicated by the event reporting information comprises at least one of the following: the single sending, the periodic sending, and the conditional sending.

24. The method according to claim 23, wherein
the receiving, by the network exposure function, a first monitoring result sent by the first target function comprises: receiving, by the network exposure function, third energy consumption information obtained by the first target function by performing energy consumption monitoring on a target object corresponding to an identifier of the first target function; and
the method further comprises:
receiving, by the network exposure function, second energy consumption information obtained by the second target function by performing energy consumption monitoring on a target object corresponding to an identifier of the second target function; and
sending, by the network exposure function, based on the second energy consumption information and the third energy consumption information, the second monitoring result to the application function based on the event reporting information carried in the energy consumption information obtaining request, wherein the second monitoring result is used for indicating the energy consumption information of the at least one target object.

25. The method according to claim 22, wherein the plurality of target objects correspond to sending thresholds that are not completely the same; the first target request sent to the first target function carries a first sending threshold, wherein the first sending threshold is a sending threshold corresponding to a target object corresponding to the first target function; and the second target request sent to the second target function carries a second sending threshold, wherein the second sending threshold is a sending threshold corresponding to a target object corresponding to the second target function.

26. An energy consumption information requesting method, comprising:
sending, by an application function, an energy consumption information obtaining request, wherein the energy consumption information obtaining request is used for requesting energy consumption information of at least one target object to be obtained.

27. The method according to claim 26, wherein the method further comprises:
receiving, by the application function, a second monitoring result corresponding to the at least one target object, wherein the second monitoring result is used for indicating the energy consumption information of the at least one target object.

28. The method according to claim 26 or 27, wherein the target object comprises one of the following: single network slice selection assistance information S-NSSAI, a DNN, a single application, a single network communication service, and a single terminal.

29. The method according to any one of claims 26 to 28, wherein the energy consumption information obtaining request carries at least one of the following:
an event identifier, used for indicating a monitoring target, wherein the monitoring target comprises at least one of the following: a total energy amount, a maximum energy consumption value, and an energy consumption credit limit;
an event filtering indication, used for indicating an application function or an application identifier that needs to be reported;
event reporting information, used for indicating a sending manner of energy consumption information, wherein the sending manner comprises at least one of the following: single sending, periodic sending, and conditional sending; and
identification information of the at least one target object.

30. The method according to claim 29, wherein in a case that the sending manner comprises the conditional sending, the energy consumption information obtaining request further carries a sending threshold corresponding to the conditional sending.

31. The method according to claim 29, wherein the energy consumption information obtaining request carries a plurality of sending thresholds, and different target objects correspond to sending thresholds that are not completely the same.

32. An energy consumption information obtaining apparatus, comprising:
a first receiving module, configured to receive a first target request, wherein the first target request is used for requesting to obtain energy consumption information of at least one target object; and
an obtaining module, configured to obtain first energy consumption information of the at least one target object based on the first target request.

33. An energy consumption information requesting apparatus, comprising:
a first determining module, configured to determine that energy consumption information of at least one target object needs to be requested; and
a second sending module, configured to send a first target request to a first target function, wherein the first target request is used for requesting the first target function to obtain the energy consumption information of the at least one target object.

34. An energy consumption information requesting apparatus, comprising:
a second determining module, configured to determine that energy consumption information of at least one target object needs to be requested; and
a third sending module, configured to send an energy consumption information obtaining request, wherein the energy consumption information obtaining request is used for requesting the energy consumption information of the at least one target object to be obtained.

35. A network side device, comprising a processor and a memory, wherein the memory stores a program or instructions runnable on the processor, and when the program or the instructions are executed by the processor, steps of the method according to any one of claims 1 to 31 are implemented.

36. A readable storage medium, wherein the readable storage medium stores a program or instructions, and when the program or the instructions are executed by a processor, steps of the method according to any one of claims 1 to 31 are implemented.
